# EUROPEAN PATENT APPLICATION

(11) **EP 2 952 234 A1**
(43) Date of publication of application: **09.12.2015**
(21) Application number: 15169055.9
(22) Date of filing: 22.05.2015
(51) Int. Cl.: A63F 13/24

(54) **A CONTROL DEVICE FOR CONSOLE-BASED VIDEOGAMES**

(30) Priority: 23.05.2014 IT RM20140268
(71) Applicant: Di Rofi, Corrado, 00032 Carpineto Romano (RM) (IT)
(72) Inventor: Di Rofi, Corrado, 00032 Carpineto Romano (RM) (IT)
(74) Representative: Zizzari, Massimo

(57) **Abstract**

A control device (100) for console-based videogames, embedded in a device similar to *a joystick,* characterized in that comprising:
- a handle (109) that further comprises: *trigger* commands (103, 104); *shoulder* commands (101, 102); *button* commands (105, 106, 107, 108); all the above commands being activated by a player, and being connected to respective switches and/or potentiometers able to generate a first set of electric signals;
- a first *joystick* (110), placed at the upper side of said handle (109), that further comprises means for conversion of a spatial position related to a respective lever, activated by the same player, to a second set of electric signals;
- a second *joystick* (112), embedded at the lower side of said handle (109), that further comprises means for conversion of a spatial position related to said handle (109), activated by the same player, in respect to a basic element (111), to a third set of electric signals;
- a cross command device, *D-Pad* (120, 121, 122, 123), placed at the upper side of said handle (109), and some button commands (115, 116, 117) placed at said basic element (111); all the above commands being activated by a player, and being connected to respective switches and/or potentiometers able to generate respectively a fourth and a fifth set of electric signals;
- means for acquisition, processing and encoding of said first, second, third, fourth and fifth set of electric signals, as data in an analogical or digital format;
- means for transmission of said data, based on said first, second, third, fourth and fifth set of electric signals, from said control device (100) to said videogames *console,* so that the same control device (100) represents an input device of command actions of the same player.

## Description

The present invention regards a control device for console-based videogames, embedded in a device similar to a *joystick.* More exactly, the device of the present innovation permits to use all the standard commands of the videogames *consoles,* like that actually on the market, and at the same time to use them in a easy and intuitive way.

This device is so user friendly that permits to activate all the multiple commands of a complex videogame, like the most afvanced ones, using just one hand and a *joystick,* in example permitting the player to use the other hand in order to eat a sandwich, to smoke a cigarette, to use a TV remote controller or to answer to the phone. All the above activities without distraction from the game action and without interruption of the game.

According to the possibility of using the device of the invention by using just one single hand, it is possible to play videogames to people disabled, who don't have the use of an arm or a hand, or having a reduced function in an arm or a hand. In this case, these persons can activate the control device of a videogames *console* by using a single hand, being the right hand or the left hand.

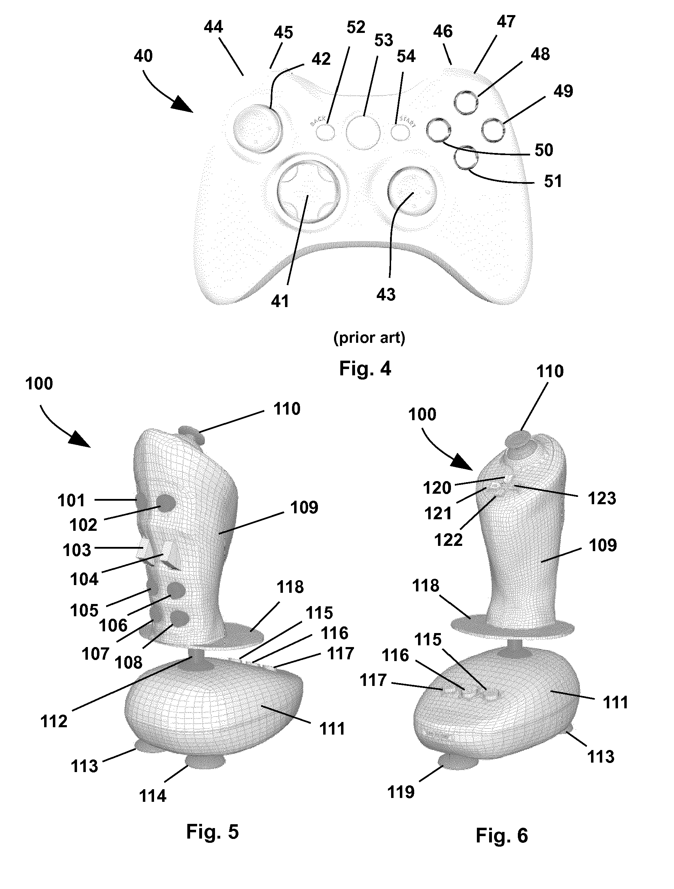

As known, the standard control device of a videogames console includes a series of commands of different types, placed at different parts of the same device having a flat and large size, and that is usually handled using both hands. This device of the prior art is shown in Figure 4 and it usually includes two small joysticks, a couple of buttons (so called *shoulder* commands), a couple of small levers (called *trigger* commands), a set of four buttons at the right side, a set of buttons in the middle side, and other cross buttons (so called *D-Pad*).

In the different control devices belonging to different videogames consoles on the market, the location and shape of these commands could change a little, but in any case their presence and function is specifically required and all the recent videogames are all designed in order to interact with a player using commands like that. Therefore, the commands are made in order to be accessable respectively to the right hand and to the left hand, requiring that the player handles the device by using both hands.

This standard design leads to a lot of drawbacks as a consequence, and here following we just list some of them.

The first drawback is that using a device having a flat and large shape makes the videogame experience quite far from a real world experience, because the interaction dynamics are quite different in respect to the real life. As an example, imagine a flight simulation game: surely the control of an airplane or an helicopter, using a device with small sticks and buttons, is much less realistic in respect to the use of a *cloche* device.

Furthermore, the need to activate the commands using both the hands, leads to the need to coordinate the right hand with the left hand, that should reach different parts of the device simultaneously, some parts being in a far location like the *trigger* commands, and other in a close position, like the *joystick* commands.

Again, considering that the action games require a quick interaction with commands, a flat and large shape of the standard devices, with their little and far sticks, and with their levers in a far location, cannot support the player in a quick, intuitive and effective action. Therefore, the potential of the interaction can be compromised, the progress in game levels and the achievements of the player are worse than expected, and the player's involvement, satisfaction and fun in the action can be affected.

The present invention overcomes all the above drawbacks by, allowing to use a control device for videogames console, working in a easy and intuitive way, by using a *joystick* shaped device, like in the traditional systems of the past '80 years.

At the same time, the device permits to integrate all the standard commands of the recent videogames consoles, like the two small sticks, the couple of *shoulder* buttons, the couple of *trigger* commands, the set of four buttons, the set of central buttons and the set of *D-Pad* buttons.

The device is so user-friendly that permits to activate all the multiple commands of a complex videogame, using just one single hand and a *joystick,* in example permitting the player to use the other hand in order to eat a sandwich, to smoke a cigarette, to use a TV remote controller or to answer to the phone. All the above activities without distraction from the game action and without interruption of the game.

The shape as cloche in the device further permits a game experience much more realistic in respect to the actual systems, thinking in example to the flight simulations and to the sport games, and at the same time permits a much more comfortable coordination of the different commands, like the two small sticks, the couple of *shoulder* buttons, the couple of *trigger* commands, the set of four buttons, the set of central buttons and the set of *D-Pad* buttons.

All that leads to a videogame interaction that is much quicker, intuitive and effective, and therefore the player advances in game levels and achieves the goals, leading to a better player's involvement, satisfaction and fun in the action.

Furthermore, the control device of the present invention provides data acquisition of the player's actions, data processing and transmission to the videogames console, in a format that is similar to that of the prior art, so that the full compatibility with previous videogames on the market is fully guaranteed.

Therefore, it is specific subject of the present invention a control device for console-based videogames, embedded in a device similar to a *joystick,* characterized in that comprising:
- a handle that further comprises: *trigger* commands; *shoulder* commands; *button* commands; all the above commands being activated by a player, and being connected to respective switches and/or potentiometers able to generate a first set of electric signals;
- a first *joystick,* placed at the upper side of said handle, that further comprises means for conversion of a spatial position related to a respective lever, activated by the same player, to a second set of electric signals;
- a second *joystick,* embedded at the lower side of said handle, that further comprises means for conversion of a spatial position related to said handle, activated by the same player, in respect to a basic element, to a third set of electric signals;
- a cross command device, *D-Pad,* placed at the upper side of said handle, and some button commands placed at said basic element; all the above commands being activated by a player, and being connected to respective switches and/or potentiometers able to generate respectively a fourth and a fifth set of electric signals;
- means for acquisition, processing and encoding of said first, second, third, fourth and fifth set of electric signals, as data in an analogical or digital format;
- means for transmission of said data, based on said first, second, third, fourth and fifth set of electric signals, from said control device to said videogames *console,* so that the same control device represents an input device of command actions of the same player.

The present invention will now be described for illustrative but not limitative purposes, according to its preferred embodiments, with particular reference to figures of the enclosed drawings, wherein:
Figure 1 is a front perspective view of a control device of a videogames console according to the present invention;
Figure 2 is a rear perspective view of the same control device of Figure 1;
Figure 3 is a lateral perspective view of the same control device of Figures 1 and 2, in a configuration having its components disassembled;
Figure 4 is a front view of a control device of a videogames console according to the prior art;
Figure 5 is a front perspective view of the same control device of Figures 1 and 2, according to the present invention;
Figure 6 is a rear perspective view of the same control device of Figures 1 and 2;
Figure 7 is a rear view of the same control device of Figures 1 and 2;
Figure 8 is a lateral view of the same control device of Figures 1 and 2;
Figure 9 is a top view of the same control device of Figures 1 and 2;
Figure 10 is a perspective view of two specific components, belonging to the device of the invention, achieving a mechanical coupling between the upper and lower part of the same device.

It is here underlined that only few of the many conceivable embodiments of the present invention are described, which are just some specific non-limiting examples, having the possibility to describe many other embodiments based on the disclosed technical solutions of the present invention.

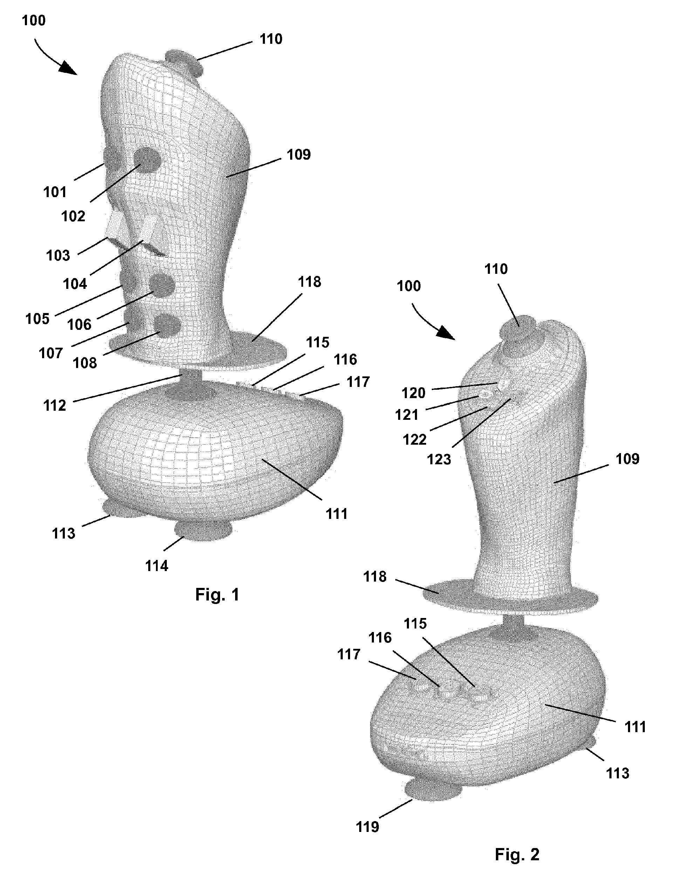

Figures 1 and 2 show a control device 100 of a videogames console according to the present invention, in a front and rear view. The device 100 is achieved by a device similar to a *joystick,* basically comprising: a handle 109; a basic element 111; a first *joystick* 110, placed at the upper side of said handle 109; a second *joystick* 112, embedded at the lower side of said handle 109; *trigger* commands 103, 104; *shoulder* commands 101, 102; *button* commands 105, 106, 107, 108; a cross command device, *D-Pad* 120, 121, 122, 123; and other button commands 115, 116, 117. All the above commands are activated by a player, and generate respective electric signals. The *trigger* commands 103, 104, the *shoulder* commands 101, 102, and the *button* commands 105, 106, 107, 108, are connected to respective switches and/or potentiometers and generate a first set of electric signals.

The first *joystick* 110 further comprises means for conversion of a spatial position related to a respective lever, activated by the same player, to a second set of electric signals. The second *joystick* 112 further comprises means for conversion of a spatial position related to said handle 109, activated by the same player, in respect to said basic element 111, to a third set of electric signals.

The cross command device, *D-Pad* 120, 121, 122, 123, is placed at the upper side of said handle 109, and said button commands 115, 116, 117 are placed at said basic element 111, all the above commands being activated by the same player, and being connected to respective switches and/or potentiometers able to generate respectively a fourth and a fifth set of electric signals.

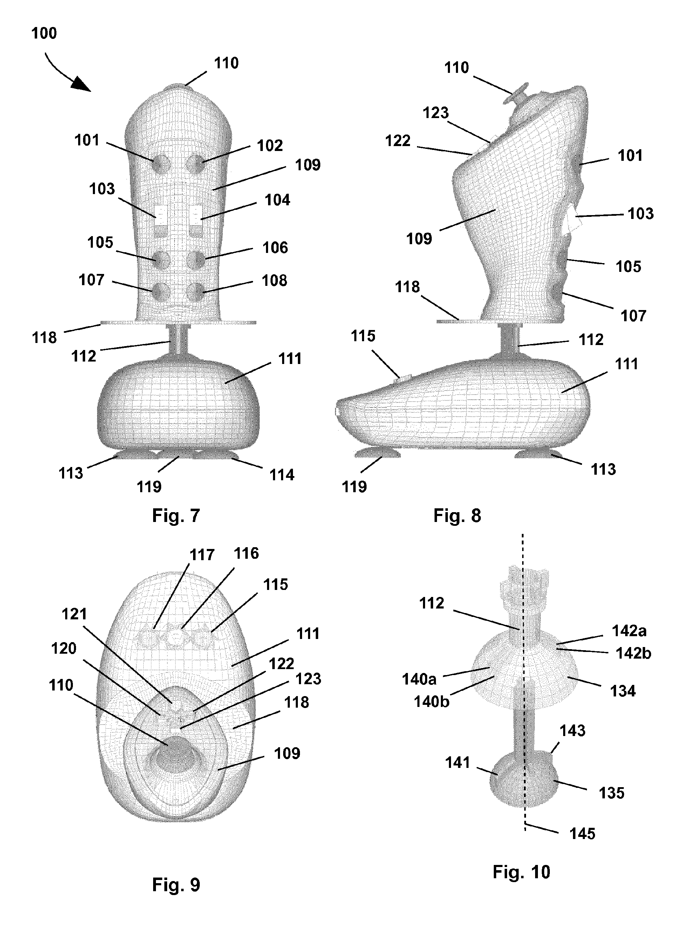

The control device 100, including all its components, is further visible in figures 7, 8 and 9, where a rear view, a lateral view and a top view of the same device are respectively shown.

The control device 100 further comprises means for acquisition, processing and encoding of said first, second, third, fourth and fifth set of electric signals, as data in an analogical or digital format. Furthermore, it comprises means for transmission of said data, based on said first, second, third, fourth and fifth set of electric signals, from said control device 100 to said videogames *console,* so that the same control device 100 represents an input device of command actions of the same player.

It is possible to better understand how the single commands have been moved and achieved, just comparing Figure 4, where a control device 40 of a videogames console is shown according to the prior art, with Figures 5 and 6, where a control device 100 of a videogames console is shown according to the present invention. In the traditional device 40, the *shoulder* commands 44, 47 are placed at the rear border far from the player, instead in the device 100 of the invention the *shoulder* commands 101, 102 are placed at the first row of commands in the handle 109, so that they can be easily activated by the index finger of the player.

In the traditional device 40, the *trigger* commands 45, 46 are placed either at the rear border far from the player, instead in the device 100 of the invention the *trigger* commands 103, 104 are placed at the second row of commands in the handle 109, so that they can be easily activated by the player, again with the index finger or the middle finger.

In the traditional device 40, the button commands 48, 49, 50, 51 are placed at the upper surface of the device, in the top right side in respect to the player, instead in the device 100 of the invention the button commands 105, 106, 107, 108 are placed at the third and fourth row of commands in the handle 109, so that they can be easily activated by the player, possibly with the respective ring and little fingers.

In the traditional device 40, the first *joystick* 43 is placed at the upper surface of the device, in the middle right down side in respect to the player, instead in the device 100 of the invention the first *joystick* 110 is placed at the top part of the handle 109, so that it can be easily activated by the player, using the thumb.

In the traditional device 40, the second *joystick* 42 is placed at the upper surface of the device, in the left top side in respect to the player, instead in the device 100 of the invention the second *joystick* 112 is embedded at the lower part of the handle 109, and it detects the orientation in respect to the basic element 111. The player can use the second *joystick* 112 simply using the palm of the hand in order to orientate the handle 109 in respect to the basic element 111.

In the traditional device 40, the cross commands *D-Pad* 41 are placed at the upper surface of the device, in the middle left down side in respect to the player, instead in the device 100 of the invention the cross commands *D-Pad* 120, 121, 122, 123 are placed at the top part of the handle 109, so that they can be easily activated by the player, using the thumb.

In the traditional device 40, the button commands 52, 53, 54 are placed at the upper surface of the device, in the middle top side in respect to the player, instead in the device 100 of the invention the button commands 115, 116, 117 are placed in the basic element 111, so that they can be easily activated by the player.

The control device 100 further includes: a set of suction pads 113, 114, 119, placed at the lower side of said basic element 111, and able to fix said control device 100 to a flat surface, like in example a table, by a suction mechanism; and a protruding element 118 placed at the lower side of said handle 109 and able to support a closed hand directing the same handle 109.

In such a way, a player can reach and activate said second *joystick* 112 using the palm of only one hand, said first *joystick* 110 using the thumb finger, said *shoulder* commands 101, 102 using the index finger, said *trigger* commands 103, 104 using the index or the middle finger, said *button* commands 105, 106, 107, 108 using respectively the ring or the little finger, and said cross commands *D-Pad* 120, 121, 122, 123 using the thumb or index finger.

Figure 10 shows a component of said second *joystick* 112, embedded at the lower side of said handle 109. It further comprises an upper cap element 134 and a lower cap element 135, that are overlapping and concentric each other, and that achieve an articulated joint. The lower cap 135 includes two linear and transversal protruding elements 141, 143 on its upper surface, that are inserted in respective housings 140a, 140b and 142a, 142b on the lower surface of the upper cap 134.

In such a way, the player can activate the second *joystick* 112 for conversion of a spatial position related to said handle 109, in respect to said basic element 111, to a third set of electric signals. Furthermore, the same *joystick* 112 can be flexible in any direction, avoiding any rotation of the handle 109 in respect to the axis 145.

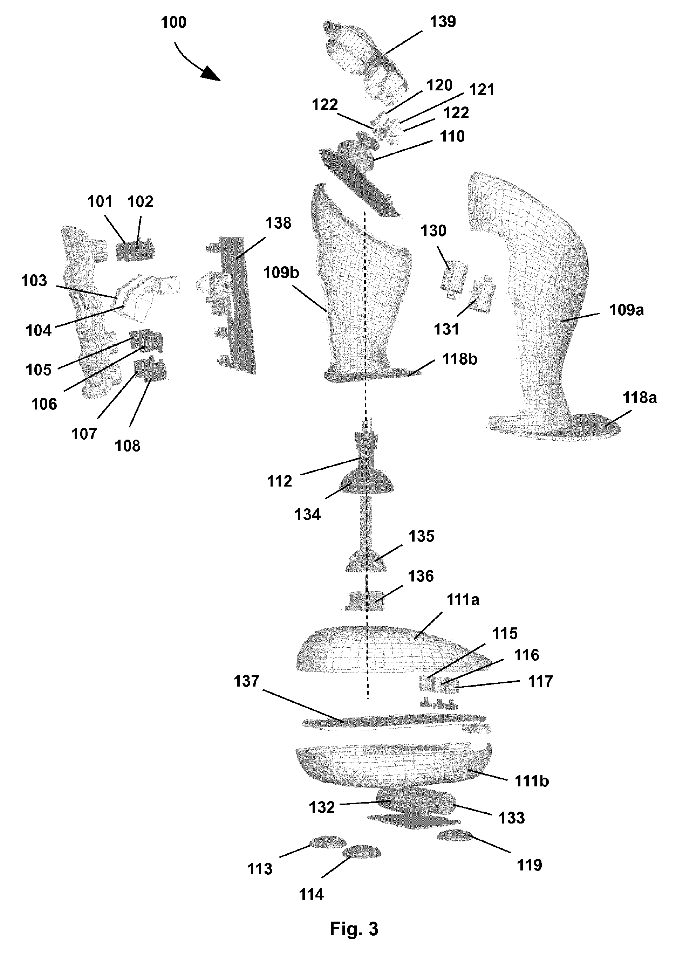

Figure 3 represents the same control device 100 of the present invention, in an exploded configuration showing all its components disassembled.

The device 100 further comprises at least a couple of batteries 132, 133, that permit to power supply all the electronic components of the same device, like sensors of contact, switches and/or potentiometers, means of acquisition, processing and encoding of electric signals in an analogical or digital format, and means of data transmission from the control device 100 to the *console* for videogames.

In the control device 100, said means for acquisition, processing and encoding of electric signals, and said means for transmission of data from said control device 100 to said videogames *console,* are computing means that encode data according to a protocol that is perfectly compatible with the protocol of control devices of the prior art.

In such a way, from the point of view of said videogames *console,* the acquisition of data related to the player's action is achieved exactly in the same way it is achieved from control devices of the prior art, and therefore the full compatibility of videogames previously available on the market is guaranteed.

Therefore, the above examples show that the present invention achieves all the proposed objectives. In particular, it permits to obtain a control device for videogames console, working in a easy and intuitive way, by using a *joystick* shaped device, like in the traditional systems of the past '80 years.

At the same time, the device permits to integrate all the standard commands of the recent videogames consoles, like the two small sticks, the couple of *shoulder* buttons, the couple of *trigger* commands, the set of four buttons, the set of central buttons and the set of *D-Pad* buttons.

Further according to the invention, the device is so user-friendly that permits to activate all the multiple commands of a complex videogame, using just one single hand and a *joystick,* in example permitting the player to use the other hand in order to eat a sandwich, to smoke a cigarette, to use a TV remote controller or to answer to the phone. All the above activities without distraction from the game action and without interruption of the game.

The shape as cloche in the device further permits a game experience much more realistic in respect to the actual systems, thinking in example to the flight simulations and to the sport games, and at the same time permits a much more comfortable coordination of the different commands, like the two small sticks, the couple of *shoulder* buttons, the couple of *trigger* commands, the set of four buttons, the set of central buttons and the set of *D-Pad* buttons.

All that leads to a videogame interaction that is much quicker, intuitive and effective, and therefore the player advances in game levels and achieves the goals, leading to a better player's involvement, satisfaction and fun in the action.

Further according to the invention, the control device of the present invention provides data acquisition of the player's actions, data processing and transmission to the videogames console, in a format that is similar to that of the prior art, so that the full compatibility with previous videogames on the market is fully guaranteed.

It is here underlined that only few of the many conceivable embodiments of the present invention are described, which are just some specific non-limiting examples, having the possibility to describe many other embodiments based on the disclosed technical solutions of the present invention.

## Claims

1. A control device (100) for *console*-based videogames, embedded in a device similar to a *joystick,* **characterized in that** comprising:
- a handle (109) that further comprises: *trigger* commands (103, 104); *shoulder* commands (101, 102); *button* commands (105, 106, 107, 108); all the above commands being activated by a player, and being connected to respective switches and/or potentiometers able to generate a first set of electric signals;
- a first *joystick* (110), placed at the upper side of said handle (109), that further comprises means for conversion of a spatial position related to a respective lever, activated by the same player, to a second set of electric signals;
- a second *joystick* (112), embedded at the lower side of said handle (109), that further comprises means for conversion of a spatial position related to said handle (109), activated by the same player, in respect to a basic element (111), to a third set of electric signals;
- a cross command device, *D-Pad* (120, 121, 122, 123), placed at the upper side of said handle (109), and some button commands (115, 116, 117) placed at said basic element (111); all the above commands being activated by a player, and being connected to respective switches and/or potentiometers able to generate respectively a fourth and a fifth set of electric signals;
- means for acquisition, processing and encoding of said first, second, third, fourth and fifth set of electric signals, as data in an analogical or digital format;
- means for transmission of said data, based on said first, second, third, fourth and fifth set of electric signals, from said control device (100) to said videogames *console,* so that the same control device (100) represents an input device of command actions of the same player.

2. A control device (100) for *console*-based videogames, according to previous claim 1, **characterized in that** further comprising:
- a set of suction pads (113, 114, 119), placed at the lower side of said basic element (111), and able to fix said control device (100) to a flat surface, like in example a table, by a suction mechanism;
- a protruding element (118) placed at the lower side of said handle (109) and able to support a closed hand directing the same handle (109),
so that a player can reach and activate said second *joystick* (112) using the palm of only one hand, said first *joystick* (110) using the thumb finger, said *shoulder* commands (101, 102) using the index finger, said *trigger* commands (103, 104) using the index or the middle finger, said *button* commands (105, 106, 107, 108) using respectively the ring or the little finger, and said cross commands *D-Pad* (120, 121, 122, 123) using the thumb or index finger.

3. A control device (100) for *console*-based videogames, according to one or more of previous claims, **characterized in that**:
- said second *joystick* (112), embedded at the lower side of said handle (109), further comprises an upper cap element (134) and a lower cap element (135), that are overlapping and concentric each other, and that achieve an articulated joint; the lower cap (135) includes two linear and transversal protruding elements (141, 143) on its upper surface, that are inserted in respective housings (140a, 140b) and (142a, 142b) on the lower surface of the upper cap (134),
so that the player can activate the second *joystick* (112) for conversion of a spatial position related to said handle (109), in respect to said basic element (111), to a third set of electric signals; and so that the same *joystick* (112) can be flexible in any direction, avoiding any rotation of the handle (109) in respect to the axis (145).

4. A control device (100) for *console*-based videogames, according to one or more of previous claims, **characterized in that** further comprising:
- at least a couple of batteries (132, 133), that permit to power supply all the electronic components of the same device, like sensors of contact, switches and/or potentiometers, means of acquisition, processing and encoding of electric signals in an analogical or digital format, and means of data transmission from the control device (100) to the *console* for videogames.

5. A control device (100) for *console*-based videogames, according to one or more of previous claims, **characterized in that**:
- said means for acquisition, processing and encoding of electric signals, and said means for transmission of data from said control device (100) to said videogames *console,* are computing means that encode data according to a protocol that is perfectly compatible with the protocol of control devices of the prior art,
so that, from the point of view of said videogames *console,* the acquisition of data related to the player's action is achieved exactly in the same way it is achieved from control devices of the prior art, and therefore the full compatibility of videogames previously available on the market is guaranteed.
